# EUROPEAN PATENT APPLICATION

(11) **EP 1 154 386 A2**
(43) Date of publication of application: **14.11.2001**
(21) Application number: 01300832.1
(22) Date of filing: 31.01.2001
(51) Int. Cl.: G07F 19/00, G06F 3/023

(54) **Self service banking**

(30) Priority: 12.05.2000 GB 0011332
(71) Applicant: International Computers Ltd., London, EC2A 1SL (GB)
(72) Inventor: Stokes, Christopher John, Warfield, Bracknell, Berkshire RG42 3SH (GB); Bunyan, Roy James, Hook, Hampshire RG27 OPT (GB)
(74) Representative: Guyatt, Derek Charles

(57) **Abstract**

A method of providing self service banking to a customer, e.g. over the Internet or through interactive television). The customer is presented with a display containing icons (21) representing a number of accounts, and icons (22) representing money in a selected account. When the customer transfers money from the currently selected account to another account, this transfer is displayed graphically by one or more of the money icons moving from the selected account to the destination account. The transfer may be made by dragging and dropping the money icons on to the icon representing the destination account, or by selecting the amount to transfer and the destination account and then confirming the transfer.

## Description

### Background to the Invention

This invention relates to a method and apparatus for self service banking.

Many financial institutions now offer self service banking, for example allowing customers to view their current balances and recent transactions, and to pay bills. Such services may for example be provided by way of the Internet, or through interactive television.

An object of the present invention is to provide a new genre of self service banking application designed particularly for customers who are uncomfortable with conventional computer applications, or who have not previously held a bank account.

### Summary of the Invention

According to the invention, a computer-implemented method of providing self service banking to a customer comprises:
(a) presenting the customer with a display containing a plurality of account icons representing a number of accounts, the display also containing a number of money icons representing money in a selected account; and
(b) in response to the customer transferring money from the selected account to another account, graphically representing the transfer by movement of at least one of the money icons.

### Brief Description of the Drawings

Figure 1 is a block diagram of a computer system for performing a self service banking application.
Figures 2 to 4 are schematic representations of screen displays providing a user interface for the self service banking application.

### Description of an Embodiment of the Invention

One self service banking application in accordance with the invention will now be described by way of example with reference to the accompanying drawings.

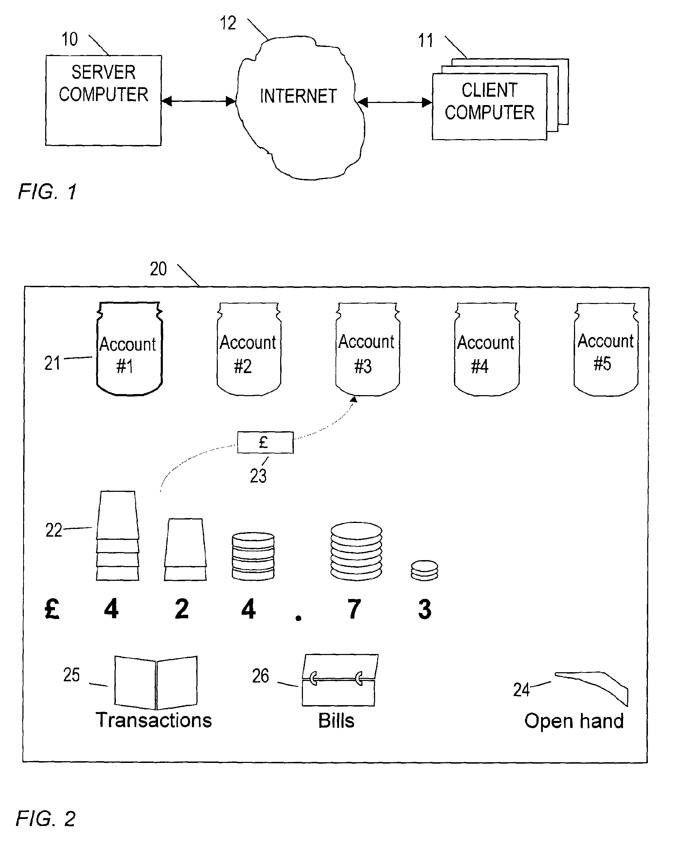

Figure 1 shows a computer system comprising a server computer 10, connected to a number of client computers 11 by way of the Internet 12. In this example, the server computer belongs to a bank or other financial institution providing self service banking services for customers. The client computers are personal computers (PCs) belonging to individual customers.

When a customer wishes to access the self service banking service, the customer must first log on to the service, using a password or some other means of identification. The logon step forms no part of the present invention, and so will not be described in any further detail.

After logging on to the service, the customer is presented with a screen 20 as shown in Figure 2. The screen includes a number of graphical icons 21 representing accounts. The account icons are depicted as physical objects that might be used to hold cash. In the present embodiment, for example, the account icons are jam jars, as traditionally used to save and organise cash for different purposes. However, it will be appreciated that other forms of icon are possible.

In the present example, the account icons 21 are simply labelled "Account #1" and so on. It will be appreciated, however, that different labels may be used according to the customer's requirements. The accounts represented may be separate accounts (e.g. a current account and a savings account), or may be merely notional subdivisions of a single account, representing funds earmarked for specific purposes. Thus, for example, an account icon labelled "Vacations" may represent a portion of the funds in the customer's savings account that the customer has specifically earmarked for vacation expenditure.

The customer can select any of the accounts, e.g. by clicking on the appropriate icon 21 with the mouse. When an account is selected, the account icon is highlighted and the balance in that account is displayed on the screen. For example, in Figure 2, Account #1 has been selected. As shown, the balance is indicated by a graphical representation of a number of piles 22 of banknotes and coins, and also by the corresponding amount in figures.

The customer can transfer money between the selected account and any of the other accounts by clicking on one of the piles 22 of notes or coins and "dragging" (holding the mouse button down) a note or coin from that pile to the account icon 21 corresponding to the destination account. While a note or coin is being dragged, it is represented by a moving note or coin icon 23, and the number of notes or coins in the original pile is reduced. The note or coin can then be "dropped" on to the destination account, by releasing the mouse button, and the balances for the source and destination accounts are automatically updated. Dropping a note or coin outside any of the account icons (or on to the icon for the currently selected account) causes the transfer to be cancelled and the money to be returned to the selected pile.

Thus, it can be seen that the movement of money between accounts is represented in animated form, by movement of the money icons towards the destination account icon.

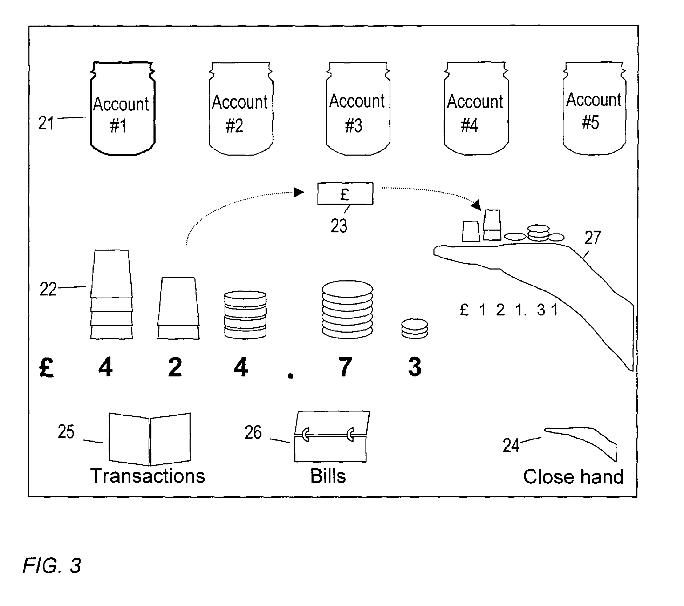

The screen 20 also includes a "hand" icon 24, which can be used for transferring specific sums from one account to another. Clicking on the hand icon causes an enlarged hand icon 27 to be displayed, as shown in Figure 3. This acts as a temporary store of money, the amount currently in the temporary store being indicated by piles of note or coin icons in the hand, and also by numerical figures below. To transfer money into the temporary store, the customer can drag notes and coins from the piles 22 and drop them on to the hand icon. As before, while a note or coin is being dragged, it is represented by a moving note or coin icon 23, and the number of notes or coins in the original pile is reduced. Alternatively, clicking on the figures under the hand icon causes a pop-up box to be displayed, into which the customer can type a specific amount in figures, to be transferred from the selected account into the temporary store.

When the required amount has been built up in the temporary store, the customer can click on the hand icon, causing it to change into a closed fist. The hand icon can then be dragged and dropped on to the required destination account, automatically updating the balances for the source and destination accounts. If the customer attempts to change accounts or to pay bills with the hand icon selected, the hand icon automatically closes, putting the money back into the source account.

The screen 20 also includes a "transactions" icon 25. Clicking on this causes a scrollable statement window (not shown) to be displayed, showing the latest transactions in the customer's account, in conventional statement format. Clicking anywhere outside the statement window closes it.

The screen 20 also includes a "bills" icon 26. Clicking on this icon 26 calls up a list (not shown) of payees who can be paid through the system, allowing the customer to select a payee.

The list of payees may, for example, be represented graphically as a card index.

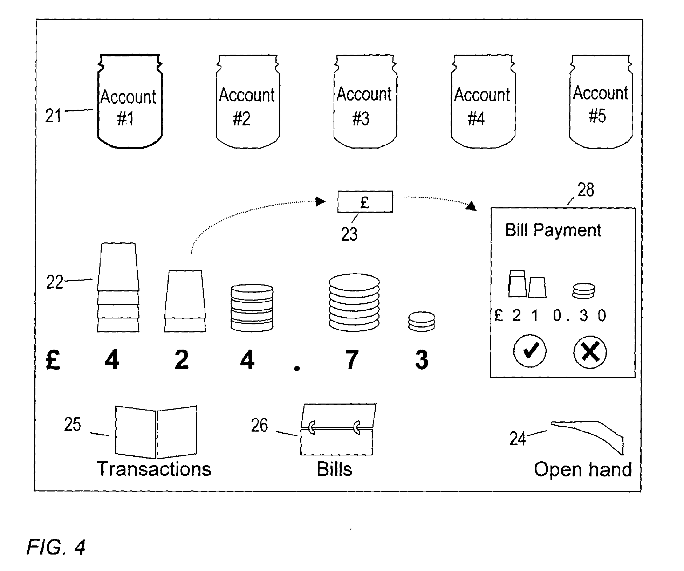

When a payee is selected, a bill payment area 28 for that payee is displayed on the screen, as shown in Figure 4. The amount currently allocated to the bill is indicated by piles of note or coin icons in the area 28, and also by numerical figures below. The customer can drag and drop notes and coins from the currently selected account on to this bill payment area, to specify the bill amount. As before, while a note or coin is being dragged, it is represented by a moving note or coin icon 23, and the number of notes or coins in the original pile is reduced. Alternatively, clicking on the figures causes a pop-up box to be displayed, into which the customer can type a specific amount in figures.

After the required amount of money has been specified in the bill payment area, the customer can click on a "Tick" button, which causes a message to be sent to the bank, instructing the bank to pay the bill. Alternatively, clicking on an "X" button exits from the bill payment area without paying the bill.

### Some possible modifications

It will be appreciated that many modifications may be made to the system described above without departing from the scope of the present invention.

In particular, it will be appreciated while the above description is Internet-based, other embodiments of the invention may be based on interactive television or other technologies. Alternatively, instead of using a PC, the customer might access the service through a kiosk.

In the above description, it was assumed that the customer uses a mouse as pointing device. However, it will be appreciated that alternatively other forms of pointing device such as trackballs or touch screens may be used. In particular, in the case of an interactive TV system, the customer could use a TV remote control unit as a pointing device, with specified buttons on the control unit (e.g. buttons 2, 4, 6, and 8) being used to control movement and another button (e.g. button 0) being used to "click".

Alternatively, the movement of money could be controlled without a pointing device. For example, the customer could use specified buttons on a TV remote control unit to select notes or coins and to select the destination account, and another button on the remote control unit to confirm the transfer. The movement of the note or coin icons towards the destination account item would then be animated as if they were being dragged.

## Claims

1. A computer-implemented method of providing self service banking to a customer, the method comprising:
(a) presenting the customer with a display containing a plurality of account icons (21) representing a number of accounts, the display also containing a number of money icons (22) representing money in a selected account; and
(b) in response to the customer transferring money from the selected account to another account, graphically representing the transfer by movement of at least one of the money icons.

2. A method according to Claim 1 wherein the customer performs a transfer by dragging and dropping the money icons (22) on to an account icon representing a destination account.

3. A method according to Claim 1 wherein the customer performs a transfer by selecting an amount to transfer, selecting a destination account, and then confirming the transfer.

4. A method according to Claim 3 wherein the customer selects the amount to transfer and the destination account, using a remote control device for an interactive television.

5. A method according to any preceding claim wherein the account icons (21) are depicted as physical objects that may be used to contain money.

6. A method according to any preceding claim, further including:
(a) displaying a transfer icon (27) representing a temporary store of money; and
(b) enabling the customer to drag and drop money icons on to the transfer icon to build up a sum for transfer, and then to drag and drop the transfer icon on to an account icon representing a destination account.

7. A method according to any preceding claim, further including enabling the customer to view a record of the customer's transactions.

8. A method according to any preceding claim, further including:
(a) displaying a bill payment icon (28) representing a bill for payment; and
(b) graphically representing payment of the bill by movement of at least one of the money icons on the bill payment icon.

9. A method according to Claim 8 including enabling the customer to allocate money to payment of a bill by dragging and dropping at least one of the money icons on to the bill payment icon (28).

10. A computer-implemented method of providing self service banking to a customer, the method comprising:
(a) presenting the customer with a display containing a number of money icons (22) representing money in a source account, and a bill payment icon (28) representing a bill for payment; and
(b) graphically representing allocation of money to the bill by movement of at least one of the money icons to the bill payment icon.

11. A computer system for providing self service banking to a customer, the system comprising:
(a) means for presenting the customer with a display containing a plurality of account icons (21) representing a number of accounts, the display also containing a number of money icons (22) representing money in a selected account; and
(b) means responsive to the customer transferring money from the selected account to another account, for graphically representing the transfer by movement of at least one of the money icons.

12. An information carrier including computer program means for performing a computer-implemented method of providing self service banking to a customer, the method comprising:
(a) presenting the customer with a display containing a plurality of account icons (21) representing a number of accounts, the display also containing a number of money icons (22) representing money in a selected account; and
(b) in response to the customer transferring money from the selected account to another account, graphically representing the transfer by movement of at least one of the money icons.
